# EUROPÄISCHE PATENTSCHRIFT

(11) **EP 2 591 530 B1**
(45) Veröffentlichungstag und Bekanntmachung des Hinweises auf die Patenterteilung: **09.03.2016**
(21) Anmeldenummer: 11833569.4
(22) Anmeldetag: 05.12.2011
(51) Int. Cl.: H02H 9/04, H02H 3/20, G05F 1/56

(54) **SCHALTUNG ZUM SCHUTZ EINES ELEKTRISCHEN VERBRAUCHERS GEGEN ÜBERSPANNUNGEN**
CIRCUIT FOR PROTECTING AN ELECTRIC LOAD FROM OVERVOLTAGES
CIRCUIT PERMETTANT DE PROTÉGER UN CONSOMMATEUR ÉLECTRIQUE CONTRE DES SURTENSIONS

(30) Priorität: 14.12.2010 DE 102010054402
(43) Veröffentlichungstag der Anmeldung: 15.05.2013
(73) Patentinhaber: Init Innovative Informatikanwendungen In Transport Verkehrs- Und Leitsystemen GmbH, 76131 Karlsruhe (DE)
(72) Erfinder: GUELTIG, Michael, 76297 Stutensee (DE)
(74) Vertreter: Patent- und Rechtsanwälte Ullrich & Naumann
(86) Internationale Anmeldenummer: PCT/DE2011/050052
(87) Internationale Veröffentlichungsnummer: WO 2012/079570

(56) Entgegenhaltungen:
- US-A1- 2004 150 927

## Beschreibung

Die Erfindung betrifft eine Schaltung zum Schutz eines elektrischen Verbrauchers gegen Überspannungen.

Elektrische Verbraucher weisen üblicherweise einen Spannungsbereich auf, innerhalb dessen sie sicher betrieben werden können. Bei Unterschreiten des Bereichs schaltet der elektrische Verbraucher ab, bei Überschreiten droht eine Zerstörung des elektrischen Verbrauchers. Ursache für Unterspannungen ist häufig eine starke Belastung der Energieversorgung, beispielsweise bei einem Anlassvorgang in einem Fahrzeug, oder Unterbrechungen der Energieversorgung in einem Störungsfall. Ein kurzfristiger Unterspannungsfall wird häufig durch Pufferkondensatoren oder Batterien abgefangen.

Ursache für Überspannungen sind beispielsweise Blitzschlag, Schalthandlungen innerhalb des Versorgungsnetzwerkes, Zuschalten von Energieversorgern, elektrostatische Entladungen oder plötzlicher Belastungsrückgang im Versorgungsnetz. Insbesondere in Versorgungsnetzwerken innerhalb eines Fahrzeuges treten derartige Überspannungsquellen häufig auf. Zum Schutz vor derartigen Überspannungen werden den elektrischen Verbrauchern üblicherweise Schutzschaltungen vorgeschaltet, so dass eine Zerstörung der elektrischen Verbraucher weitestgehend ausgeschlossen werden kann.

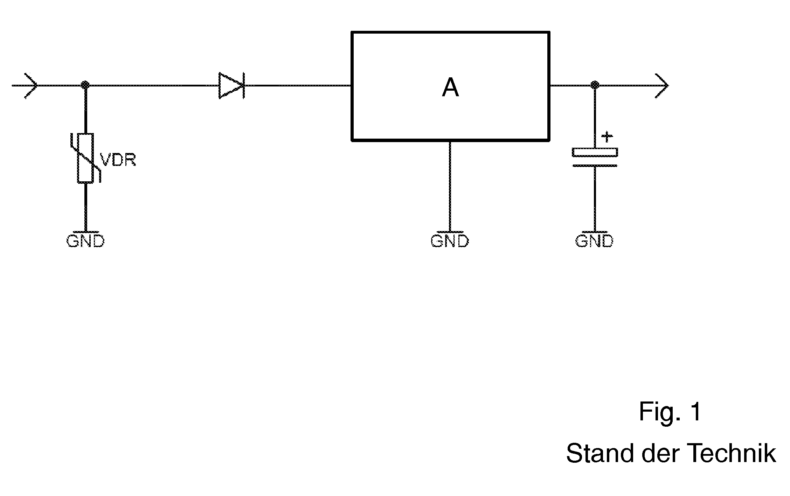

Für einen besonders zuverlässigen Überspannungsschutz werden mehrstufige Konzepte eingesetzt. Ein aus dem Stand der Technik bekanntes Beispiel eines mehrstufigen Konzepts ist in Fig. 1 dargestellt. Eingangsseitig ist die Schutzschaltung an das Bordnetz oder eine andere Spannungsversorgung angeschlossen. Ausgangsseitig sind ein oder mehrere elektrische Verbraucher angeschlossen und werden mit Energie versorgt. Direkt am Eingang der Schutzschaltung ist ein Varistor VDR angeordnet, der schnell ansteigende Überspannungen ableitet. Dadurch können beispielsweise kurze ± 1000 V-Impulse auf ca. ± 70 V begrenzt werden. Eine nachfolgende Diode dient als einfacher Verpolungsschutz, so dass negative Überspannungen abgefangen werden. Dadurch werden nur noch Überspannungen mit + 70 V durchgelassen. Eine nachfolgende Spannungsbegrenzungsschaltung A dient dazu, Überspannungen noch weiter zu reduzieren und eine Begrenzungsspannung einhalten zu können. Die Begrenzungsschaltung A kann beispielsweise die Überspannung auf 32 V reduzieren und kann ähnlich einem Linearregler arbeiten und die Überspannung in Wärme umsetzen.

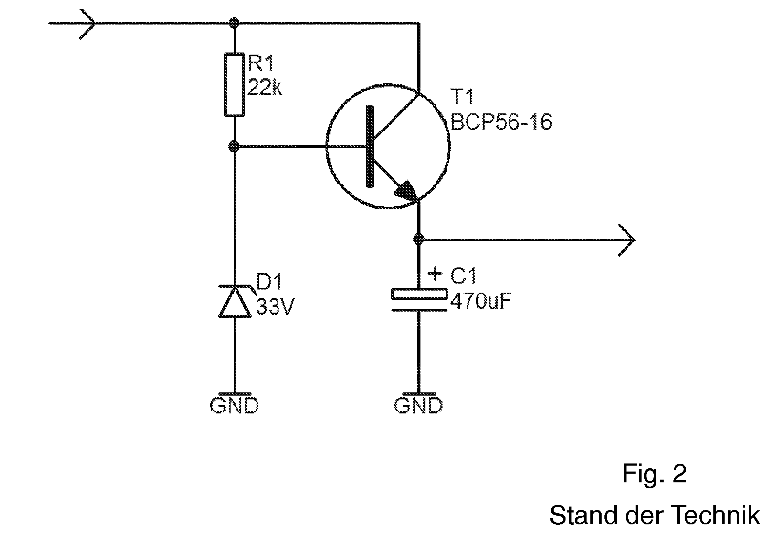

Für sehr niedrige Ströme kann die Spannungsbegrenzung unter Verwendung eines Bipolartransistors im Spannungsfolger-Betrieb erreicht werden. Eine derartige Spannungsbegrenzungsschaltung ist in Fig. 2 dargestellt. Die Basis des Transistors ist mit einer Zenerdiode verbunden, über die maximal die Durchbruchsspannung abfällt, im Beispiel der Fig. 2 sind dies 33 V. Auf diese Weise wird wiederum die Spannung am Emitter des Transistors begrenzt.

Problematisch an dieser Schaltung ist, dass bereits im normalen Betrieb eine Spannung von ca. 1 V über der Begrenzungsschaltung abfällt. Dies führt zum einen zu einer relativ hohen Verlustleistung, insbesondere bei hohen Belastungsströmen. Zum anderen reduziert sich die für den angeschlossenen elektrischen Verbraucher verbleibende Spannungsreserve. Ist die Schutzschaltung beispielsweise in einem Kraftfahrzeug eingesetzt und bricht die Versorgungsspannung während eines Anlassvorganges ein, so kann dies ein Zurücksetzen des angeschlossenen Gerätes zur Folge haben.

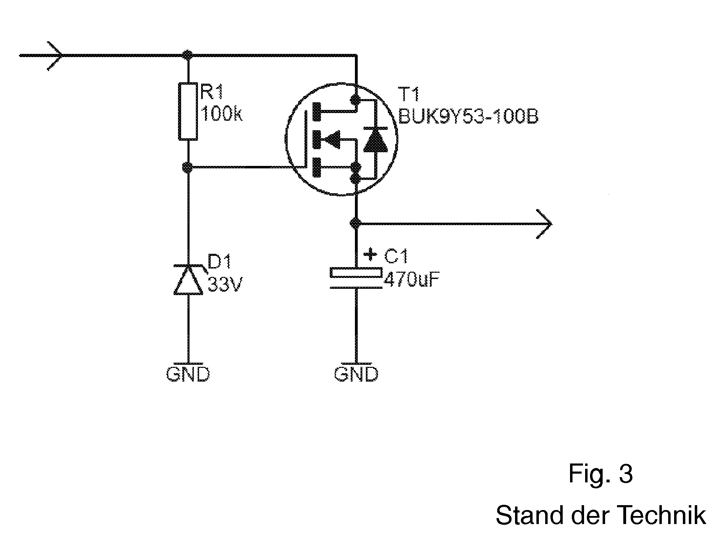

Eine weitere Möglichkeit wäre, den Bipolartransistor gegen einen MOSFET (Metall Oxid Halbleiter Feldeffekttransistor) zu ersetzen, die üblicherweise für ihre geringe Verlustspannung bekannt sind. Möglich wäre beispielsweise die Verwendung eines p-Kanal-MOSFET. Allerdings sind diese MOSFETS insbesondere bei hohen Belastungsströmen teuer und die Schaltungen benötigen relativ viel Platz. Mit dem Einsatz eines n-Kanal-MOSFETs, wie beispielsweise in Fig. 3 dargestellt, können zwar Kosten und Bauvolumen der Schutzschaltung erheblich reduziert werden, allerdings ist der Spannungsverlust über die Schutzschaltung noch deutlich höher. Es stellen sich Spannungsverlust von 2 bis 3 V ein.

Andere Schutzschaltungen, wie beispielsweise integrierte Low-Drop-Regler, bieten zwar geringe Spannungsverluste über der Schutzschaltung und weisen ein gutes dynamisches Verhalten auf. Allerdings sind diese meist bezüglich der Grunddaten, wie der möglichen Begrenzungsspannung oder der möglichen Strombelastung, stark eingeschränkt. Sollen Begrenzungsspannungen jenseits 15 V abgesichert werden, sind nur noch sehr wenige Spannungsregler verfügbar. Bei noch größeren Begrenzungsspannungen oder der Forderung einer einfachen Anpassbarkeit der Begrenzungsspannung, scheiden Spannungsregler vollständig aus.

Eine Schaltung gemäß dem Oberbegriff des Anspruchs 1 ist aus US2004/0150927 bekannt.

Der vorliegenden Erfindung liegt daher die Aufgabe zugrunde, eine Schaltung der eingangs genannten Art derart auszugestalten und weiterzubilden, dass ein zuverlässiger Schutz gegen Überspannungen bei geringer Verlustleistung in der Schutzschaltung und gleichzeitig möglichst geringer Baugröße der Schutzschaltung erzielt werden kann.

Erfindungsgemäß wird die voranstehende Aufgabe durch die Merkmale des Anspruchs 1 gelöst. Danach weist die in Rede stehende Schaltung einen n-Kanal-MOSFET (Metall Oxid Halbleiter Feldeffekttransistor) und ein Mittel zum Erzeugen einer Referenzspannung auf, wobei das Mittel zum Erzeugen der Referenzspannung mit dem Gate des MOSFETs verbunden ist, wobei eingangsseitig an der Schaltung eine Versorgungsspannung anliegt und wobei das Gate unter Verwendung einer Hilfsspannungsquelle derart mit einer Spannung größer als die Versorgungsspannung versorgt ist, dass der MOSFET durchgesteuert ist

In erfindungsgemäßer Weise ist zunächst erkannt worden, dass mit relativ geringem schaltungstechnischem Mehraufwand auch bei Verwendung eines n-Kanal-MOSFETs eine Schutzschaltung mit geringem Spannungsverlust über der Schutzschaltung erzielt werden kann. Dazu wird erfindungsgemäß eine Hilfsspannung verwendet, mit der das Gate des MOSFET derart angesteuert wird, dass der MOSFET durchsteuert. Besonders niedrige Spannungsverlust können dann erreicht werden, wenn der MOSFET im Sättigungsbereich betrieben wird und somit voll durchgesteuert ist.

Hierzu wird zunächst ein Mittel zum Erzeugen einer Referenzspannung mit dem Gate des MOSFETs verbunden. Das Mittel erzeugt eine Spannung, die von der Versorgungsspannung am Eingang der Schutzschaltung abhängt, jedoch maximal einen oberen Grenzwert, die Referenzspannung, annimmt. Mit diesem Mittel wird in den meisten Fällen eine Spannung gegen Masse eingestellt. Die Referenzspannung begrenzt die Spannung am Gate des MOSFETs. Gleichzeitig ist das Gate mit einer Hilfsspannungsquelle verbunden, die das Gate mit einer Spannung größer als die eingangsseitig anliegende Versorgungsspannung versorgt. Dadurch wird der MOSFET über den linearen Bereich hinaus angesteuert. Auf diese Weise können die Vorzüge der relativ günstigen n-Kanal-MOSFETs, insbesondere bezüglich der geringeren Baugröße und des gegenüber p-Kanal-MOSFETs besseren Übertragungsverhaltens voll genutzt werden, ohne dass hohe Spannungsverluste über der Schutzschaltung in Kauf genommen werden müssen.

In einer besonders einfachen Ausgestaltung des Mittels zum Erzeugen einer Referenzspannung könnte dieses durch eine Zenerdiode gebildet sein. Die Referenzspannung wird durch die Knickspannung der Zenerdiode bestimmt. Nach Überschreiten der Knickspannung wird die Spannung am Gate des MOSFETs auf einem annährend konstanten Niveau gehalten.

Zur Verbesserung des dynamischen Verhaltens der Schutzschaltung könnte das Mittel zum Erzeugen einer Referenzspannung durch einen Shunt-Regler gebildet sein. Die Referenz-Elektrode des Shunt-Reglers kann über einen Spannungsteiler derart mit dem Ausgang der Schutzschaltung wechselwirken, dass die gesamte Schutzschaltung annährend das Verhalten eines voll integrierten Low-Drop-Reglers aufweist. Der Spannungsteiler kann zwischen der Source des MOSFETs und Masse geschaltet sein. Der Mittelabgriff kann mit der Referenzelektrode verbunden sein. Auf diese Weise wird die Spannung am Gate derart geregelt, dass eine gewünschte Begrenzungsspannung über weite Bereiche der Eingangsspannung gewährleistet werden kann.

Zur Erhöhung der Begrenzungsspannung der Schaltung, d.h. der Spannung die maximal innerhalb eines Betriebsbereichs der Schutzschaltung am Ausgang der Schutzschaltung anliegt, kann eine zweite Zenerdiode zu dem Shunt-Regler in Reihe geschaltet sein. Auf diese Weise erhöht die zweite Zenerdiode die mögliche Referenzspannung am Gate des MOSFET um ihre Durchbruchspannung.

In einer besonders bevorzugten Ausgestaltung der Hilfsspannungsquelle ist diese durch eine Ladungspumpe gebildet. Die Ladungspumpe kann ein oder mehrstufig ausgebildet sein und erzeugt vorzugsweise eine Hilfsspannung von ca. 5 V. Zur Verbesserung des dynamischen Verhaltens der Schutzschaltung könnte die Hilfsspannungsquelle aus der Spannung am Source des MOSFETs versorgt werden. Dadurch bleibt die Spannungsdifferenz zwischen Source und Gate des MOSFETs annähernd konstant, wodurch wiederum nahezu unabhängig von der Versorgungsspannung am Eingang der Schutzschaltung ein geringer Spannungsverlust über der Schutzschaltung gehalten werden kann.

Für die Versorgung der Hilfsspannungsquelle mit einer Spannung am Source des MOSFETs während eines Einschaltvorgangs der Schutzschaltung, kann eine Diode vorgesehen sein, die unter Zwischenschaltung eines Widerstands mit dem Gate des MOSFETs verbunden ist. Über die Diode und den Widerstand wird das Gate auf ein Potential gehoben, das den MOSFET in einen leitenden Zustand bringt. Zwar ist in diesem Zustand der Spannungsverlust über dem MOSFET noch relativ groß, allerdings reicht die Spannung am Source des MOSFET aus, um die Hilfsspannungsquelle zu versorgen. Der Widerstand dient als Strombegrenzung. Die Hilfsspannungsquelle baut eine Hilfsspannung auf, die die Spannung am Gate des MOSFETs anhebt. Das Gate wird immer stärker in Richtung Sättigung angesteuert, der Spannungsverlust über dem MOSFET nimmt mehr und mehr ab. Die Diode verliert während oder spätestens nach Aufbau der Hilfsspannung ihre Funktion, da die Spannung am Gate des MOSFET höher als die Versorgungsspannung der Schutzschaltung ist und damit die Diode in Sperrrichtung beaufschlagt ist.

Zum Schutz des Gates des MOSFETs vor zu hohen oder zu niedrigen Spannungen könnte parallel zur Source-Gate-Strecke des MOSFETs eine dritte Zenerdiode geschaltet sein. Bei Überschreiten einer Gate-Source-Spannung höher als die Durchbruchspannung der Zenerdiode wird die überschießende Spannung durch die Zenerdiode abgefangen. Das Gate wird maximal mit einer Spannung beaufschlagt, die um die Durchbruchspannung der Zenerdiode größer ist als die Source-Spannung.

Vorzugsweise kommt die erfindungsgemäße Schutzschaltung in Kraftfahrzeugen zum Einsatz. Die Begrenzungsspannung der Schaltung liegt vorzugsweise bei Werten größer als 25 V. Besonders bevorzugter Weise ist die Begrenzungsspannung größer als 30 V.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: schematische Darstellung zur Verdeutlichung eines mehrstufigen Konzepts zum Schutz eines elektrischen Verbrauchers vor Überspannungen,
- Fig. 2: eine Schutzschaltung nach dem Stand der Technik unter Verwendung eines Bipolartransistors,
- Fig. 3: eine Schutzschaltung nach dem Stand der Technik unter Verwendung eines n-Kanal-MOSFETs,
- Fig. 4: eine erfindungsgemäße Schutzschaltung unter Verwendung einer Zenerdiode als Mittel zum Erzeugen einer Referenzspannung,
- Fig. 5: eine erfindungsgemäße Schutzschaltung unter Verwendung eines ShuntReglers als Mittel zum Erzeugen einer Referenzspannung und
- Fig. 6: eine Darstellung einer mehrstufigen Schutzschaltung unter Verwendung eines Varistors als Großsicherung und einer erfindungsgemäßen Schutzschaltung als Feinsicherung.

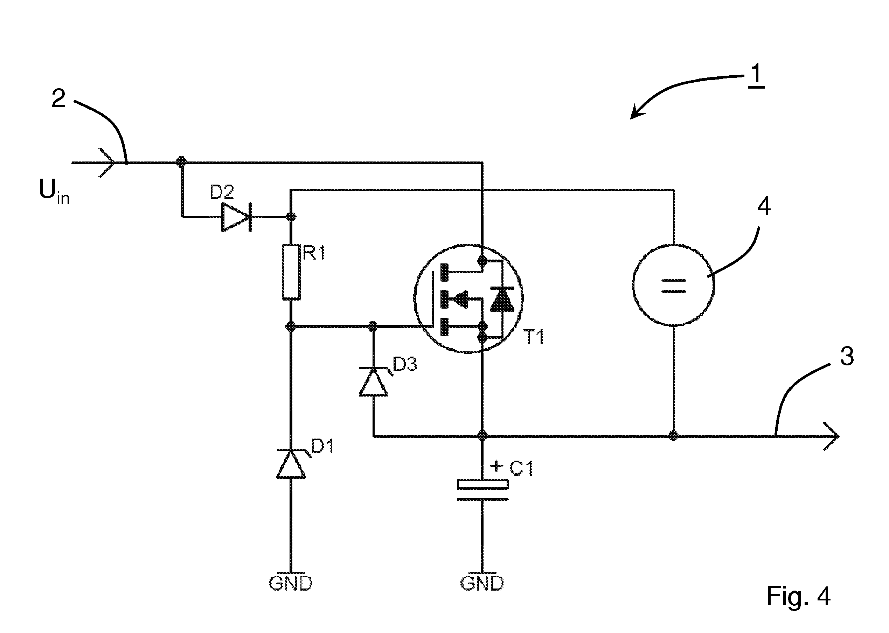

Fig. 4 zeigt ein erstes Ausführungsbeispiel einer erfindungsgemäßen Schutzschaltung. Die Schutzschaltung 1 ist am Eingang 2 mit einer nicht eingezeichneten Spannungsquelle verbunden und dadurch mit einer Versorgungsspannung Uᵢₙ versorgt. Der Eingang 2 ist mit dem Drain eines n-Kanal-MOSFETs T1 verbunden. Die Source des MOSFETs T1 ist mit dem Ausgang 3 der Schutzschaltung 1 verbunden. Das Gate des MOSFET T1 ist über eine Diode D2 und einen Widerstand R1 mit dem Eingang 2 der Schutzschaltung 1 verbunden. Auf diese Weise wird nach Anlegen der Versorgungsspannung Uᵢₙ das Gate mit einer Spannung versorgt, die durch die Versorgungsspannung Uᵢₙ, den Spannungsabfall über die Diode D2 und den Spannungsabfall über den Widerstand R1 bestimmt ist. Das Gate ist ferner über eine erste Zenerdiode D1 mit Masse verbunden. Die erste Zenerdiode D1 wird in Sperrrichtung betrieben, so dass das Gate maximal mit einer Spannung versorgt ist, die durch die Durchbruchsspannung der ersten Zenerdiode D1 bestimmt ist. In diesem Ausführungsbeispiel wirkt die erste Zenerdiode D1 als Mittel zum Erzeugen einer Referenzspannung. Die Source des MOSFETs T1 ist ferner mit einer Hilfsspannungsquelle 4 verbunden, die das Gate mit einer Spannung größer als die Versorgungsspannung Uᵢₙ versorgen kann. Die Hilfsspannungsquelle 4 ist mit ihrem zweiten Pol an der Verbindungsstelle zwischen der Diode D2 und dem Widerstand R1 verbunden. Eine weitere Zenerdiode D3 (eine dritte Zenerdiode im Sinne der angehängten Ansprüche) ist parallel zur Source-Gate-Strecke des MOSFET T1 geschaltet und dient dem Schutz des Gates des MOSFETs T1 vor zu kleinen und zu großen Spannungen. Ein Kondensator C1 ist mit der Source des MOSFETs T1 verbunden und dient der Spannungspufferung bei einem Spannungseinbruch am Eingang 2 der Schutzschaltung 1.

Beim Betrieb der Schaltung wird am Eingang 2 der Schutzschaltung 1 eine Versorgungsspannung Uᵢₙ angelegt. Über die Diode D2 und den Widersand R1 liegt am Gate des MOSFETs T1 eine Spannung an, die den MOSFET T1 in einen leitenden Zustand versetzt. An dem MOSFET T1 fällt in diesem Zustand noch eine relativ hohe Spannung ab. Die Source ist mit dem Ausgang 3 verbunden und versorgt den angeschlossenen, in Fig. 4 nicht dargestellten Verbraucher mit elektrischer Energie. Gleichzeitig wird die Hilfsspannungsquelle 4 versorgt und dort eine Hilfsspannung aufbaut. Diese hebt das Potential am Gate des MOSFETs T1 an, so dass der MIOSFET T1 in Sättigung gerät oder zumindest den Sättigungszustand nahe kommt. Dadurch sinkt der Durchgangswiderstand des MOSFETs T1 und damit der Spannungsabfall über den MOSFET T1.

Die Begrenzungsschaltung weist in einem Versorgungsspannungsbereich eine Hysterese auf. Dadurch besteht der erhebliche Vorteil, dass nicht bei jedem Einbruch der Versorgungsspannung die Schutzschaltung neu durchgeschaltet werden muss. Sobald die Versorgungsspannung einen gewissen Betrag überstreitet, reicht die Spannung hinter dem MOSFET aus, um die Hilfsspannungsquelle und deren eventuell notwendige Beschaltungselemente zu versorgen. Die Hilfsspannungsquelle beginnt zu arbeiten und der MOSFET wird durchgesteuert. Bricht beispielsweise während eines Anlassvorgangs eines Fahrzeuges, die Versorgungsspannung ein, so bleibt der MOSFET voll durchgesteuert und die nachfolgende Schaltung ist innerhalb gewisser Grenzen vor einem Zurücksetzen geschützt. Erst wenn die Schaltung unter eine untere Betriebsspannungsgrenze sinkt, reicht die Schaltung nicht mehr aus, um die Schutzschaltung weiter zu betreiben. Das angeschlossene Gerät geht aus. Erst wenn die Spannung wieder den oberen Hysteresepunkt überschreitet, wird der nachfolgende elektrische Verbraucher wieder versorgt. Bei einer beispielhaften Dimensionierung der ersten Zenerdiode mit einer Durchbruchspannung von 33 V, einer Diode D2 mit einem BAV99, einem Widerstand R1 mit 100 kΩ, einer zweiten Zenerdiode D3 als 8V2 und einem BUK9Y53-100B als MOSFET T1 ergibt sich ein oberer Hysteresepunkt von 7 V, ab dem die Schaltung durchschaltet, und einem unteren Hysteresepunkt von ca. 4,5 V, ab dem die Schaltung wieder sperrt.

Wenn eine Überspannung auftritt, wird die Spannung am Gate durch die erste Zenerdiode D1 begrenzt und der MOSFET arbeitet als Spannungsverfolger. Dadurch können weite Teile der Überspannung abgefangen werde. In der recht einfachen Ausgestaltung gemäß Fig. 4 hängt jedoch die Ausgangsspannung in gewissem Maße von der Höhe der Überspannung ab. Ferner haben Exemplarstreuungen des MOSFETs und der Zenerdioden sowie die Temperatur und die am Ausgang 3 der Schutzschaltung 1 angeschlossene Last Auswirkung auf die Ausgangsspannung. Für viele Fälle reicht dies dennoch aus, wenn der nachfolgende elektrische Verbraucher ausreichend spannungsfest ist. So kann beispielsweise die Begrenzungsspannung auf nominale 31 V gelegt werden, während die nachfolgenden Schaltungsteile 38 V verkraften und am Eingang im normalen Betrieb maximal 28 V anliegen.

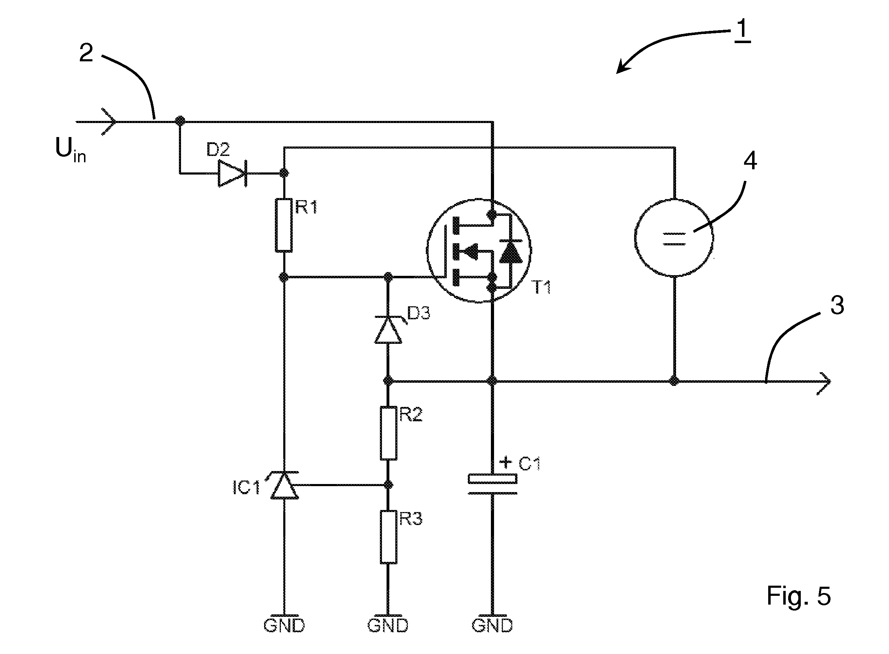

Wenn diese Spannungswerte näher beieinander liegen sollen, kann die Schaltung um eine Regelung erweitert werden. Auf diese Weise kann die maximale Ausgangsspannung reduziert werden. Dies kann beispielsweise dann genutzt werden, wenn eingangsseitig dauerhaft bis zu 35 V ausgehalten werden müssen und die nachfolgenden Schaltungsteile maximal 38 V verkraften. Eine einfache Regelung kann mit einem einstellbaren Shunt-Regler realisiert werden, wie in Fig. 5 dargestellt. Beispielhaft sei als möglicher Shunt-Regler der TL 431 oder der LMV 431 genannt. Die Schaltung gemäß Fig. 5 unterscheidet sich von der Schaltung nach Fig. 4 dadurch, dass die Zenerdiode gegen einen Shunt-Regler IC1 ausgetauscht ist. Damit dient der Shunt-Regler IC1 als Mittel zum Erzeugen der Referenzspannung. Die Referenzelektrode des Shunt-Reglers IC1 ist am Mittelabgriff eines Spannungsteilers verbunden, der zwischen der Source des MOSFETs T1 und Masse GND geschaltet ist. Der Spannungsteiler wird durch die Widerstände R2 und R3 gebildet.

Über die Widerstände R2 und R3 kann die Begrenzungsspannung sehr einfach dimensioniert werden. Wenn die Ausgangsspannung unter der eingestellten Begrenzungsspannung liegt, spielt der Shunt-Regler IC1 keine Rolle und der MOSFET ist voll durchgesteuert. Erst wenn die Eingangsspannung über die Begrenzungsspannung steigt, regelt der Shunt-Regler IC1 die Gate-Spannung am MOSFET T1 so, dass die Ausgangsspannung der eingestellten Begrenzungsspannung entspricht. Dadurch entsteht eine Ausgangsspannung, die unabhängig von der Eingangsspannung und dem verwendeten MOSFET-Exemplar ist. Wenn zusätzlich die Widerstände R2 und R3 und der Shunt-Regler eng toleriert und möglichst temperaturunabhängig ausgewählt sind, kann die erlaubte Dauereingangsspannung und die maximal erlaubte Spannung nachfolgender Schaltungsteile nahe beieinander liegen. Auf diese Weise kann ein sehr gutes dynamisches Verhalten der Gesamtschaltung erzielt werden.

Die Schaltung verhält sich prinzipiell wie ein voll integrierter Low-Drop-Regler, bei dem sich - im Gegensatz zu einem Low-Drop-Regler - durch geeignete Wahl der Bauteile die Ausgangsspannung, die Eingangsspannung und die Begrenzungsspannung relativ frei dimensionieren lässt. Dadurch ist die starke Beschränkung, die beispielsweise durch voll integrierte Low-Drow-Regler hinsichtlich der verfügbaren Ausgangsspannungen auferlegt sind, beseitigt.

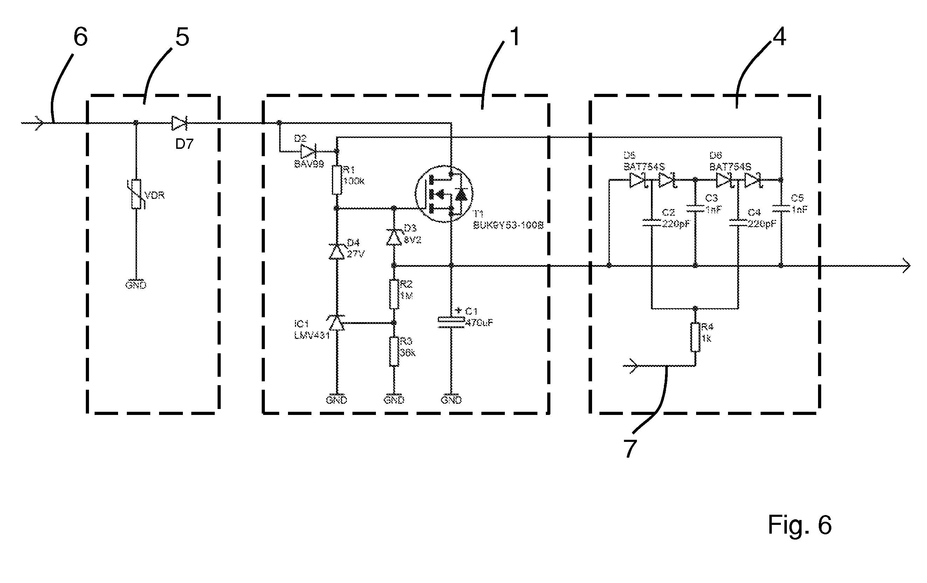

Fig. 6 zeigt einen Einsatz einer erfindungsgemäßen Schutzschaltung in einem mehrstufigen Schutzkonzept, wodurch der durch die Schaltung ermöglichte Schutz gegen Überspannungen noch weiter verbessert wird. Neben der erfindungsgemäßen Schutzschaltung 1 ist ein Grobschutz 5 vorgeschaltet, der schnell ansteigende Überspannungen am Eingang 6 der Gesamtschutzschaltung ableitet. Hierbei kommt ein Varistor VDR zum Einsatz, der in dem dargestellten Beispiel eine Begrenzungsspannung von 70 V aufweist. Eine Diode D7 dient als einfacher Verpolungsschutz und als Schutz gegen negative Überspannungen. Alternativ zu Diode D7 können auch Schaltungen mit geringeren Spannungsabfällen verwendet werden. Beispielhaft sei auf eine Schutzschaltung hingewiesen, wie sie in der DE 10 2010 051 874 beschrieben ist.

Die in Fig. 6 verwendete Schutzschaltung 1 unterscheidet sich von der Schutzschaltung nach Fig. 5 dadurch, dass zwischen dem Gate des MOSFET T1 und dem Shunt-Regler IC1 eine weitere Zenerdiode D4 (eine zweite Zenerdiode im Sinne der angehängten Ansprüche) geschaltet ist. In der in Fig. 6 dargestellten Ausgestaltung beträgt die Durchbruchspannung der Zenerdiode D4 27 V, um die sich die Begrenzungsspannung der Schaltung erhöht. Der Shunt-Regler IC1 wird durch einen LMV431 gebildet. Der Spannungsteiler besteht aus einem Widerstand R2 von 1 MΩ und einem Widerstand R3 von 36 kΩ. Der Pufferkondensator C1 wird durch ein 470 µF großen Kondensator gebildet. Die weiteren Schaltungselemente der Schutzschaltung 1 sind wie bereits beispielhaft mit Fig. 4 beschrieben dimensioniert.

Die Hilfsspannungsquelle 4 ist durch eine Ladungspumpe gebildet. Die Ladungspumpe ist zweistufig aufgebaut, wobei eine erste Stufe mit einer Doppeldiode D5 und den Kondensatoren D2 und D3 eine Spannungserhöhung um ca. 2,5 V erzeugt. Eine zweite Stufe mit Doppeldiode D6 und Kondensatoren C4 und C5 erhöht die Spannung um weitere ca. 2,5 V, so dass die durch die Hilfsspannungsquelle erzeugte Spannung ca. 5 V über der Spannung am Source des MOSFETs T1 und damit wegen des sehr geringen Spannungsabfalls über den MOSFET T1 ca. 5 V über Versorgungsspannung Uᵢₙ am Eingang der Schutzschaltung 1 liegt. Beispielhafte Dimensionierungen sind in Fig. 6 dargestellt. Die Doppeldioden D5 und D6 können durch BAT754S gebildet sein. Die Kondensatoren C2 und C4 sind 220 pF groß, die Kondensatoren C3 und C5 jeweils 1 nF. Die Steuerspannung der Ladungspumpe, die an der Leitung 7 anliegt und über einen Widerstand R4 (1 kΩ) auf den Mittelanschluss der Doppeldioden D5 und D6 geschaltet ist, ist ein durch einen Mikrocontroller erzeugtes Rechtecksignal. Die Hilfsspannungsquelle kann neben der Schutzschaltung 1 auch zur Versorgung weiterer Elemente genutzt werden, beispielsweise einen Verpolungsschutz nach der DE 10 2010 051 874. Das Rechtecksignal, das in Steuerleitung 7 eingekoppelt ist, kann auch für andere Schaltungen verwendet werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Schutzschaltung lediglich zur Erörterung der beanspruchten Lehre dienen, diese jedoch nicht auf die Ausführungsbeispiele einschränken.

### Bezugszeichenliste

- T1: n-Kanal-MOSFET
- R1: Widerstand
- D2: Diode
- D1: erste Zenerdiode
- D3: dritte Zenerdiode
- C1: Pufferkondensator
- VDR: Varistor
- D4: zweite Zenerdiode
- D5: Doppeldiode
- D6: Doppeldiode
- D7: Diode
- Uᵢₙ: Versorgungsspannung der Schutzschaltung
- 1: Schutzschaltung
- 2: Eingang der Schutzschaltung
- 3: Ausgang der Schutzschaltung
- 4: Hilfspannungsquelle
- 5: Grobschutz
- 6: Eingang
- 7: Steuerleitung

## Patentansprüche

1. Schaltung zum Schutz eines elektrischen Verbrauchers gegen Überspannungen mit einem in Reihe mit dem Verbraucher geschalteten n-Kanal-MOSFET (Metall Oxid Halbleiter Feldeffekttransistor) (T1) und einem Mittel zum Erzeugen einer Referenzspannung, wobei eingangsseitig an der Schaltung eine Versorgungsspannung anliegt, und wobei das Gate des MOSFETs (T1) unter Verwendung einer Hilfsspannungsquelle derart mit einer Spannung größer als die Versorgungsspannung versorgt ist, dass der MOSFET (T1) durchgesteuert ist,
**dadurch gekennzeichnet, dass** das Mittel zum Erzeugen der Referenzspannung mit dem Gate des MOSFETs (T1) verbunden ist, dass die Hilfsspannungsquelle aus der Spannung am Source des MOSFETs (T1) versorgt wird, und dass eine Diode (D2) mit der Versorgungsspannung und unter Zwischenschaltung eines Widerstands (R1) in Durchlassrichtung mit dem Gate des MOSFETs (T1) verbunden ist, wodurch das Gate des MOSFETs (T1) bis zum Aufbau der Hilfsspannung über die Diode (D2) angesteuert wird und die Diode (D2) während oder spätestens nach dem Aufbau der Hilfsspannung ihre Funktion verliert.

2. Schaltung nach Anspruch 1, **dadurch gekennzeichnet, dass** das Mittel zum Erzeugen der Referenzspannung durch eine erste Zenerdiode (D1) gebildet ist.

3. Schaltung nach Anspruch 1, **dadurch gekennzeichnet, dass** das Mittel zum Erzeugen der Referenzspannung durch einen Shunt-Regler (IC1) gebildet ist, dessen Referenz-Elektrode vorzugsweise an dem Mittelabgriff eines Spannungsteilers aus zwei Widerständen (R2 und R3) angeschlossen ist, wobei der Spannungsteiler zwischen der Source des MOSFETs (T1) und Masse geschaltet ist.

4. Schaltung nach Anspruch 3, **dadurch gekennzeichnet, dass** zum Erhöhen der Begrenzungsspannung der Schaltung eine zweite Zenerdiode (D4) zu dem Shunt-Regler (IC1) in Reihe geschaltet ist.

5. Schaltung nach einem der Ansprüche 1 bis 4, **dadurch gekennzeichnet, dass** eine Ladungspumpe als Hilfsspannungsquelle fungiert und eine Hilfsspannung erzeugt, wobei die Hilfsspannung vorzugsweise 5 V beträgt.

6. Schaltung nach einem der Ansprüche 1 bis 5, **dadurch gekennzeichnet, dass** parallel zur Source-Gate-Strecke eine dritte Zenerdiode (D3) geschaltet ist, mittels der das Gate vor zu hohen und zu niedrigen Spannung geschützt ist.

7. Schaltung nach einem der Ansprüche 1 bis 6, **dadurch gekennzeichnet, dass** die Begrenzungsspannung der Schaltung größer als 25 V, in besonders bevorzugter Weise größer als 30 V ist.

## Claims

1. Circuit for protecting an electrical consumer against excess voltages, having an n-channel MOSFET (metal oxide semi-conductor field effect transistor) (T1) which is connected in series to the consumer and a means for producing a reference voltage, wherein there is applied a supply voltage at the input side across the circuit and wherein the gate of the MOSFET (T1), using an auxiliary voltage source, is supplied with a voltage which is greater than the supply voltage in such a manner that the MOSFET (T1) is turned on, **characterised in that** the means for producing the reference voltage is connected to the gate of the MOSFET (T1), **in that** the auxiliary voltage source is supplied from the voltage at the source of the MOSFET (T1), and **in that** a diode (D2) is connected to the supply voltage and, with a resistor (R1) being interposed in the conducting direction, to the gate of the MOSFET (T1), whereby the gate of the MOSFET (T1) is controlled until the auxiliary voltage is produced via the diode (D2) and the diode (D2) loses its function during or at the latest after the production of the auxiliary voltage.

2. Circuit according to claim 1, **characterised in that** the means for producing the reference voltage is formed by means of a first Zener diode (D1).

3. Circuit according to claim 1, **characterised in that** the means for producing the reference voltage is formed by a shunt controller (IC1) whose reference electrode is preferably connected to the centre tap of a voltage splitter comprising two resistors (R2 and R3), wherein the voltage splitter is connected between the source of the MOSFET (T1) and earth.

4. Circuit according to claim 3, **characterised in that**, in order to increase the limitation voltage of the circuit, a second Zener diode (D4) is connected in series with respect to the shunt controller (IC1).

5. Circuit according to any one of claims 1 to 4, **characterised in that** a charging pump acts as an auxiliary voltage source and produces an auxiliary voltage, wherein the auxiliary voltage is preferably 5 V.

6. Circuit according to any one of claims 1 to 5, **characterised in that** there is connected in parallel with the source gate path a third Zener diode (D3), by means of which the gate is protected from excessively high and excessively low voltage.

7. Circuit according to any one of claims 1 to 6, **characterised in that** the limitation voltage of the circuit is greater than 25 V, in a particularly preferred manner greater than 30 V.

## Revendications

1. Circuit permettant de protéger un consommateur électrique contre des surtensions, comprenant un MOSFET à canal n (transistor à effet de champ métal/oxyde/semi-conducteur) (T1) connecté en série avec le consommateur et un moyen permettant de générer une tension de référence, une tension d'alimentation étant appliquée du côté de l'entrée du circuit et la grille du MOSFET (T1) étant alimentée avec une tension supérieure à la tension d'alimentation en utilisant une source de tension auxiliaire de manière à ce que le MOSFET (T1) soit activé,
**caractérisé en ce que** le moyen permettant de générer la tension de référence est connecté avec la grille du MOSFET (T1), **en ce que** la source de tension auxiliaire est alimentée à partir de la tension à la source du MOSFET (T1) et **en ce qu'**une diode (D2) est reliée avec la grille du MOSFET (T1) avec la tension d'alimentation et avec interposition d'une résistance (R1) dans le sens direct, la grille du MOSFET (T1) étant ainsi commandée par la diode (D2) jusqu'à la mise en place de la tension auxiliaire et la diode (D2) perdant sa fonction pendant ou au plus tard après la mise en place de la tension auxiliaire.

2. Circuit selon la revendication 1, **caractérisé en ce que** le moyen permettant de générer la tension de référence est formé par une première diode Zener (D1).

3. Circuit selon la revendication 1, **caractérisé en ce que** le moyen permettant de générer la tension de référence est formé par un régulateur shunt (IC1), dont l'électrode de référence est de préférence connectée à la prise médiane d'un diviseur de tension constitué de deux résistances (R2 et R3), le diviseur de tension étant connecté entre la source du MOSFET (T1) et la masse.

4. Circuit selon la revendication 3, **caractérisé en ce que**, pour augmenter la tension limite du circuit, une deuxième diode Zener (D4) est connectée en série au régulateur shunt (IC1).

5. Circuit selon l'une quelconque des revendications 1 à 4, **caractérisé en ce qu'**une pompe de charge sert de source de tension auxiliaire et génère une tension auxiliaire, la tension auxiliaire étant de préférence de 5 V.

6. Circuit selon l'une quelconque des revendications 1 à 5, **caractérisé en ce qu'**une troisième diode Zener (D3) est connectée en parallèle de la section source-grille, au moyen de laquelle la grille est protégée contre une tension trop élevée et trop faible.

7. Circuit selon l'une quelconque des revendications 1 à 6, **caractérisé en ce que** la tension limite du circuit est supérieure à 25 V, de manière particulièrement préférée supérieure à 30 V.
